**Europäisches Patentamt**

**European Patent Office**

**Office européen des brevets**

(19)

(11) Veröffentlichungsnummer: **0 197 076**
**B1**

(12) **EUROPÄISCHE PATENTSCHRIFT**

(45) Veröffentlichungstag der Patentschrift:
**01.03.89**

(51) Int. Cl.⁴: **G 03 B 27/73**

(21) Anmeldenummer: **85904818.3**

(22) Anmeldetag: **04.10.85**

(86) Internationale Anmeldenummer:
**PCT/EP 85/00520**

(87) Internationale Veröffentlichungsnummer:
**WO 86/02176 (10.04.86 Gazette 86/8)**

(54) **FOTOGRAFISCHES FARBVERGRÖSSERUNGS- ODER KOPIERGERÄT.**

(30) Priorität: **08.10.84 IT 487584**

(43) Veröffentlichungstag der Anmeldung:
**15.10.86 Patentblatt 86/42**

(45) Bekanntmachung des Hinweises auf die Patenterteilung:
**01.03.89 Patentblatt 89/9**

(84) Benannte Vertragsstaaten:
**AT CH DE FR GB LI**

(56) Entgegenhaltungen:
**WO-A-86/02175**
**DE-A- 3 321 136**
**US-A- 3 051 069**
**US-A- 3 807 857**

(73) Patentinhaber: **Durst Phototechnik GmbH,
Gerbergasse 58, I-39100 Bozen (IT)**

(72) Erfinder: **DELUEG, Werner, Oberdorf 65, I-39040 Vahrn
(IT)**
Erfinder: **GANDINI, Mario, Josefstrasse 23,
I-39042 Milland/Brixen (IT)**

ACTORUM AG

## Beschreibung

Die Erfindung bezieht sich allgemein auf das Gebiet der Farbbelichtung fotografischer Schichtträger bei der Herstellung von Abzügen oder Vergrößerungen von einem Filmoriginal und betrifft ein fotografisches Farbvergrößerungs- oder Kopiergerät mit einer Meßvorrichtung zum Bestimmen der Dichte einer Referenz- bzw. einer Testkopie.

Das Eintesten eines Farbvergrößerungsgerätes auf eine gegebene Film-Papierkombination ist nicht ohne Schwierigkeit und erfordert einen erheblichen Aufwand an Zeit und Material, da in der Regel mehrere Versuche gemacht und eine Reihe von Testkopien angefertigt werden müssen. Dabei wird üblicherweise so verfahren, daß zunächst in einer Probelbelichtung von einer ausgewählten Referenzvorlage, welche eine mittlere Farb- und Helligkeitsverteilung aufweist, eine erste Testkopie erstellt und diese visuell beurteilt wird. Aus den Dichte- und/oder Farbfehlern, die eine solche Testkopie in der Regel aufweist, werden empirisch die erforderlichen Korrekturen bestimmt und die Einstellung des Vergrößerungsgerätes wird entsprechend nachgeführt. Der Vorgang wird wiederholt, bis eine Testkopie die gewünschte Qualität aufweist und die Einstellung, die zu diesem Bildergebnis geführt hat, dient als Grundeinstellung des Vergrößerungsgerätes für die weiteren zu kopierenden Filmbildvorlagen.

Die Beurteilung der Probekopien und insbesondere die richtige Bewertung eventueller Farbanomalien im Hinblick auf die Bestimmung der Art und des Ausmaßes der erforderlichen Korrekturen verlangt ein hohes Maß an Erfahrung und es sind zumeist diverse Schritte notwendig, bis das gewünschte Ergebnis erzielt wird, welches zudem von der subjektiven Beurteilung einer Bedienungsperson abhängig ist.

Aus der DE-A-3 321 136 ist ein Farbkopiergerät bekannt, welches eine Einrichtung zum Messen der Farbdichte einer von einer ausgewählten Referenzvorlage erstellten Testkopie und einer Bezugs- oder Zielkopie der Referenzvorlage aufweist, wobei die Belichtungsbedingungen in Abhängigkeit einer vorhandenen Differenz der Meßergebnisse zwischen Test- und Zielkopie eingestellt werden. Dabei wird die zu messende Bildkopie in der Vorlagenebene des Kopiergerätes in den Kopierstrahlengang gelegt und die Dichte durch Messung des aus der Kopie austretenden Durchlichtes bestimmt.

Die Dichtemessung im Durchlicht hat den Nachteil, daß das Meßergebnis durch den Schichtträger des verwendeten fotografischen Materials beeinflussbar ist, wodurch Genauigkeit und Reproduzierbarkeit der Messung beeinträchtigt werden. Das als Meßlicht verwendete Kopierlicht des Kopiergerätes weist keine gleichbleibende Charakteristik auf und ist insbesondere von der in der Regel für eine Farbanpassung notwendigen Filterung des ursprünglich weißen Lichtes der Kopierlichtquelle abhängig, so daß die Dichtemessung nur als Vergleichsmessung ausgeführt werden kann und jede Messung einer Testkopie von einer Messung der Referenzkopie begleitet sein muß. Schließlich ist das Einlegen der zu messenden Bildkopie in die Bildbühne anstelle der Filmbildvorlage und das Positionieren derselben in der Meßstellung zeitaufwendig und erfordert eine gewisse Achtsamkeit seitens der Bedienungsperson, so daß das Eintesten des Kopiergerätes mit Hilfe der bekannt gewordenen Meßeinrichtung relativ umständlich ist.

Die ältere Patentanmeldung EP-85 904 968.6 der gleichen Anmelderin (WO 86/02 175) zeigt keine Meßaufnehmer zur Messung der Intensität des Lichtes der Kopierlichtquelle.

Die Aufgabe der Erfindung besteht darin, ein Farbvergrößerungs- oder Kopiergerät zu schaffen, bei welchem ein genaues und reproduzierbares Eintesten des Gerätes auf eine gegebene Film-Papierkombination aufgrund objektiver Messungen auf einfache Weise und ohne Erfordernis besonderer Erfahrung erreichbar ist. Die erfindungsgemäße Einrichtung, die diese Aufgabe löst, weist die im kennzeichnenden Teil des Anspruchs 1 angeführten Merkmale auf.

Die angegebene Erfindung ermöglicht die Bestimmung der Farbdichte von Bildkopien auf einfache und unaufwendige Weise mit einer den Reflexionsdensitometern eigenen Meßgenauigkeit und damit eine rasche und genaue Bestimmung der auf eine gegebene Film-Papierkombination zutreffenden Grundeinstellung des Vergrößerungsgerätes.

Dadurch, daß das Reflexionslicht mit der Intensität des Meßlichtes, mit welchem die Meßfläche beleuchtet wird, ins Verhältnis gesetzt wird, ergeben sich reproduzierbare Meßergebnisse unabhängig von eventuellen Veränderungen der Kopierlichtquelle. Dies bringt den weiteren Vorteil mit sich, daß für die Ermittlung der Dichtedifferenzen zwischen einer Testkopie und der Bezugs- oder Zielkopie nicht jedesmal eine Vergleichsmessung, d.h. eine Messung beider Kopien erforderlich ist, sondern daß die einmal ermittelten Meßwerte der Bezugskopie einschließlich des dem einfallenden Meßlicht zukommenden Terms gespeichert und bei der nachfolgenden Messung von Testkopien als Bezugswerte verwendet werden können.

Die Anordnung der Meßstelle außerhalb des eigentlichen Kopierstrahlenganges, insbesondere an einer Wandung des Farbkopfes des Vergrößerungsgerätes, erleichtert die Durchführung der Messungen, da die Meßstelle leicht zugänglich und zum Plazieren der zu messenden Bildkopie kein Eingriff in den Belichtungsteil des Vergrößerungsgerätes notwendig ist.

Die Nutzung der Farbkorrektur- und Verschlußfilter des Farbkopfes des Vergrößerungsgerätes zur Gewinnung von rotem, grünem und blauem Meßlicht aus der im wesentlichen weißen Kopierlichtquelle macht die Meßeinrichtung besonders kostengünstig in der Herstellung, da zusätzliche Filtermittel entfallen.

Weitere Merkmale und Vorteile der Erfindung ergeben sich aus den Unteransprüchen in Verbindung mit der nachfolgenden Beschreibung eines bevorzugten Ausführungsbeispiels.

Die Erfindung wird im folgenden anhand der Figuren 1 bis 3 näher erläutert. Es zeigen:

Fig. 1 eine schematische Darstellung eines erfindungsgemäßen Farbvergrößerungsgerätes;

Fig. 2a eine Filteranordnung des Vergrößerungsgerätes in einer ersten Arbeitsstellung;

Fig. 2b die Filteranordnung der Fig. 2a in einer zweiten Arbeitsstellung;

Fig. 3 ein Block-Schaltbild einer Meß- und Steuerschaltung.

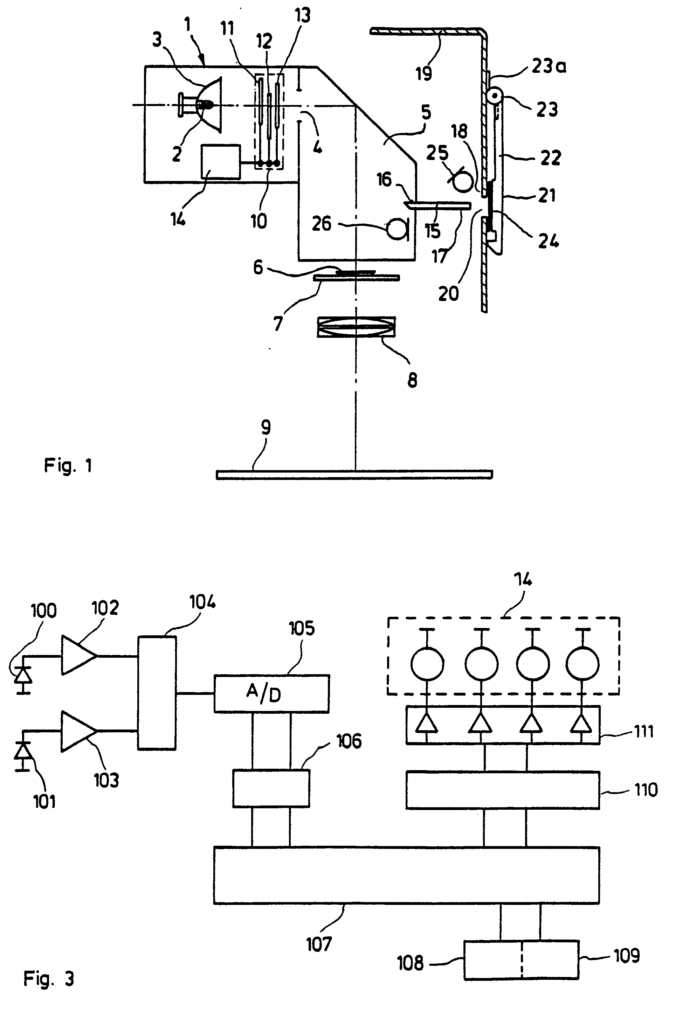

In Figur 1 ist mit der Bezugsziffer 1 allgemein der Farbkopf eines fotografischen Vergrößerungsgerätes bezeichnet, welches im übrigen nur schematisch und beschränkt auf jene Teile, die zum Verständnis der erfindungsgemäßen Einrichtung notwendig sind, dargestellt ist. Eine Lichtquelle 2 mit einem Reflektor 3 wirft Licht auf die Lichteintrittsöffnung 4 eines Lichtmischschachtes 5, an dessen Lichtaustrittsseite eine zu kopierende Vorlage 6 in einer Bildbühne 7 angeordnet ist. In Richtung Strahlengang hinter der Vorlagenebene befindet sich ein Objektiv 8, das ein scharfes Bild der Vorlage auf einer Kopierebene 9 entwirft. Vor dem Lichtmischschacht 5 ist eine Filteranordnung 10 mit Farbfiltern 11, 12 und 13 in den Komplementärfarben Cyan, Magenta und Gelb angeordnet, die über eine noch näher zu beschreibende Betätigungsvorrichtung 14 in den Strahlengang einführbar sind, so daß sie den Strahlenquerschnitt einzeln oder in Kombination miteinander teilweise oder ganz überdecken.

Ein Lichtleiter 15 liegt mit einer Lichteintrittsseite 16 im Innern des Lichtmischschachtes 5 und reicht mit der Lichtaustrittsseite 17 außerhalb des Schachtes 5 an die Wandung 18 des unter 19 angedeuteten Gehäuses des Farbkopfes heran. Im Bereich des äußeren Lichtleiterendes weist die Wandung 18 eine Öffnung 20 auf, die auf der Außenseite mit einer Abdeckung 21 verschließbar ist. Letztere besteht aus einer rechteckigen Deckplatte 22, die mit einer Schmalseite mittels eines Scharniers 23 an der Wandung 18 befestigt ist und dank der Wirkung einer Feder 23a des Scharniers im Bereich der Öffnung 20 gegen die Wandung drückt. Auf der der Öffnung 20 zugewandten Seite ist auf der Deckplatte 22 vorzugsweise ein Referenzbild, beispielsweise die Zielkopie 24 einer zum Eintesten des Vergrößerungsgerätes verwendeten Referenzvorlage befestigt, beispielsweise angeklebt. Eine zu messende Testkopie ist unter Anhebung der Deckplatte 22 zwischen Zielkopie 24 und Wandung 18 einlegbar, so daß sie von der Deckplatte gegen die Meßöffnung gedrückt und in der Meßstellung gehalten wird.

Ein fotoelektrischer Meßaufnehmer 25 ist im Innern des Gehäuses 19 auf die Öffnung 20 der Wandung 18 ausgerichtet, derart, daß von der Zielkopie 24 oder einer in Überlagerung der Zielkopie in der Meßstellung befindlichen Testkopie reflektiertes Licht auf die lichtempfindliche Fläche des Meßaufnehmers gelangt. Ein weiterer fotoelektrischer Meßaufnehmer 26 ist vorzugsweise im Innern des Lichtmischschachtes 5 angeordnet und dem im Bereich der Lichteintrittsseite 16 des Lichtleiters 15 vorhandenen Licht ausgesetzt. Die Meßaufnehmer 25 und 26 sind elektrisch mit einer Meßschaltung verbunden, von der sie Teile sind.

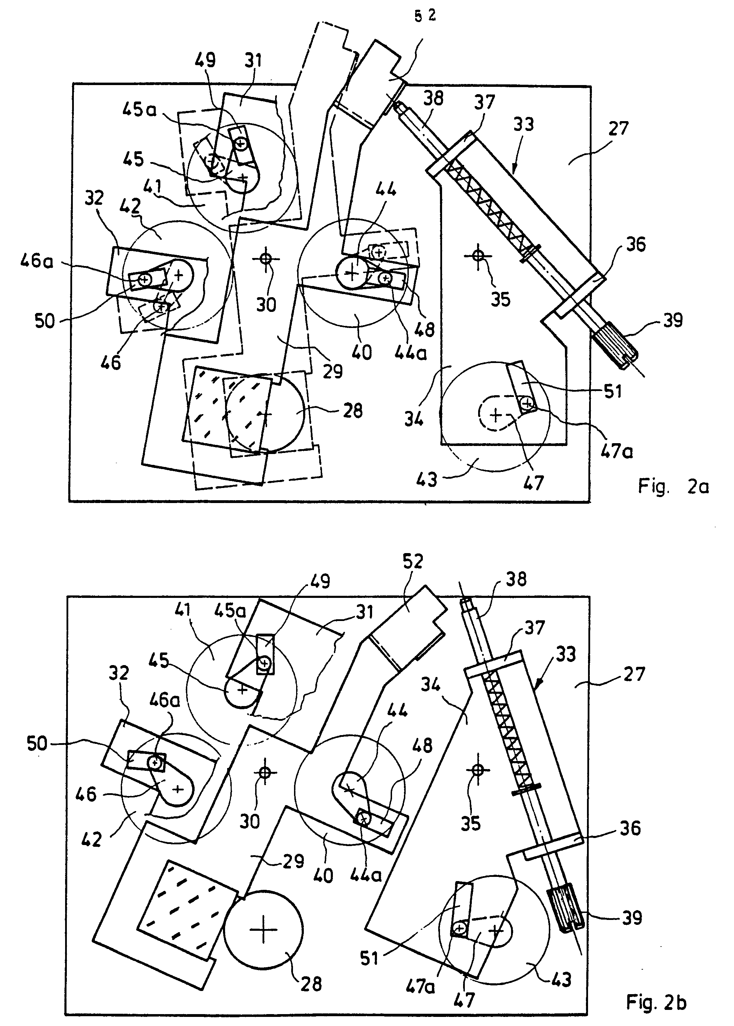

In den Figuren 2a und 2b ist eine vorteilhafte Ausführungsform der Filteranordnung 10 mit der zugehörigen Betätigungseinrichtung 14 im Hinblick auf ihre Funktion in der erfindungsgemäßen Einrichtung dargestellt. Gleiche Teile sind in beiden Figuren mit derselben Bezugsziffer bezeichnet. Auf einer Trägerplatte 27, die eine Lichtdurchlaßöffnung 28 aufweist, durch welche Licht in den Lichtmischschacht 5 gelangt, ist ein Filterträger 29 um eine feste Drehachse 30 drehbar gelagert. Zwei weitere Filterträger 31 und 32 (in den Figuren nur teilweise dargestellt) sind ebenfalls auf der Trägerplatte 27 befestigt und um jeweilige (in den Figuren nicht sichtbare) Drehachsen drehbar. Jeder Filterträger ist mit einem Farbfilter in einer der Komplementärfarben Cyan, Magenta und Gelb bestückt und die Anordnung ist so ausgelegt, daß durch Drehung der Filterträger um die jeweilige Drehachse jedes Filter teilweise oder ganz in den Strahlengang des durch die Öffnung 28 fallenden Lichtes einführbar ist. Ein Anschlagblock 33 weist eine Platte 34 auf, die um eine an der Trägerplatte 27 befestigte Drehachse 35 drehbar ist und zwischen zwei angewinkelten Endflächen 36 und 37 drei längsverstellbare Anschlagbolzen 38 trägt, von denen jeder mit einem der drei Filterträger 29, 31 und 32 in Wirkverbindung steht (in der Figur ist nur der Anschlagbolzen für den Filterträger 29 sichtbar).

Jedem der Filterträger 29, 31, 32 und dem Anschlagblock 33 sind an der Trägerplatte 27 befestigte Elektromotoren 40, 41, 42 und 43 zugeordnet, auf deren Wellen Kurbeln 44, 45, 46 und 47 drehfest sitzen und mit Zapfen 44a, 45a, 46a und 47a in Führungsösen 48, 49, 50 der Filterträger und in die Führungsöse 51 der Platte 34 des Anschlagblocks gleitbar eingreifen. Die Filterträger sind somit durch die ihnen zugeordneten Elektromotoren einzeln in drei verschiedenen, zur Achse des Lichtbündels normal liegenden Ebenen zwischen zwei durch Endanschlag der Zapfen 44a, 45a und 46a in den jeweiligen Führungsösen 48, 49 und 50 festgelegten Endstellungen bewegbar. Analogerweise ist der Anschlagblock durch den ihm zugeordneten Elektromotor in einer zu den Schwenkebenen der Filterträger parallelen Ebene zwischen zwei durch Endanschlag des Zapfens 47a in der Führungsöse 51 festgelegten Endstellung bewegbar. Welche der beiden Endstellungen eingenommen wird, hängt sowohl für die Filterträger als für den Anschlagblock lediglich von der Laufrichtung des betreffenden Motors ab.

Mit dem Anschlagblock in der in Fig. 2a gezeigten Endstellung ist der Lauf der Filterträger in Richtung Ausschwenken aus dem Strahlengang durch die Anschlagbolzen 38, die in der Bewegungsbahn einer Anstoßfläche 52 eines jeden Filterträgers liegen, begrenzt. Die einzelnen Filterträger sind also zwischen einer ersten Endstellung, in der das jeweilige Filter den gesamten Querschnitt des Strahlenbündels erfaßt (gestrichelte Linie) und einer zweiten Endstellung, in der die Filter nur zum Teil im Strahlengang liegen (ausgezogene Linie), bewegbar. Das Ausmaß des von einem Filter in der Endstellung erfaßten Teiles des Strahlenquerschnitts ist mit den verstellbaren Anschlagbolzen 38 einstellbar.

Mit dem Einstellblock in der in Fig. 2b gezeigten Stellung können die Filterträger ihren vollen, d.h. den durch den Endanschlag der Kurbelzapfen in den jeweiligen Führungsösen begrenzten Lauf ausführen. In einer der beiden Endstellungen liegen die Filter vollständig außerhalb des Strahlenganges.

Das vollständige Einführen eines der Farbfilter der Filteranordnung in den Strahlengang bewirkt die Sperrung der zur betreffenden Filterfarbe komplementären Farbkomponente des Kopierlichtes, so daß durch Einschwenken eines jeden Filters in einem Belichtungszyklus nach dem subtraktiven Belichtungsverfahren die Belichtung selektiv in den einzelnen Farben abgeschlossen werden kann. Beispielsweise wird durch Einschwenken des Cyanfilters die Rotbelichtung, durch Einschwenken des Magentafilters die Grünbelichtung und durch Einschwenken des Gelbfilters die Blaubelichtung abgeschlossen. Durch teilweises Einführen der Farbfilter in den Strahlengang ergibt sich je nach Einfuhrtiefe eine mehr oder weniger starke Anfärbung des ursprünglich im wesentlichen weißen Lichtes der Kopierlichtquelle, wie es in der Regel zum Erreichen annähernd gleicher Belichtungszeiten für alle Farbkomponenten erforderlich ist. Die Ausgangsstellung der Filter innerhalb des Strahlenganges zum Bewirken einer solchen Vorfilterung ist an Drehknöpfen 39 der Anschlagbolzen im Anschlagblock in seiner Wirkstellung (Fig. 2a) einstellbar. Für bestimmte, der eigentlichen Belichtung vorausgehende Meß- oder Einstellvorgänge, beispielsweise beim Wählen eines Bildausschnittes oder Einstellen der Bildschärfe wird vorzugsweise farblich ungefiltertes Licht verwendet. Um über das Weißlicht der Kopierlichtquelle verfügen zu können, müssen die Farbfilter vollständig aus dem Strahlengang genommen werden. Der Anschlagblock 33 ermöglicht in seiner Leerstellung (Fig. 2b) das vollständige Ausschwenken der Filter und stellt in seiner Wirkstellung (Fig. 2a) eine führe Vorfilterung, die durch die Stellung der Anschlagbolzen festgelegt ist, unverändert wieder ein.

In Fig. 3 ist das Blockschaltbild einer Meß- und Steuerschaltung des erfindungsgemäßen Farbvergrößerungsgerätes dargestellt. Die Meßschaltung umfaßt zwei Fotodioden 100 und 101, die den fotoelektrischen Meßaufnehmern 25 und 26 der Fig. 1 entsprechen und von denen die erste vom Meßobjekt in der Meßstellung reflektiertes und die zweite im Innern des Lichtmischschachtes 5 im Bereich des Lichtleiters 15 vorhandenes Meßlicht empfangen. Den Fotodioden sind Signalverstärker 102 und 103 nachgeschaltet, deren Ausgänge an einem Analogschalter 104 liegen, mittels welchem die Meßsignale der beiden Dioden sequentiell ausgelesen werden. Der Ausgang des Analogschalters ist mit dem Eingang eines A/D-Wandlers 105 mit logarithmischer Übertragungscharakteristik verbunden, so daß an dessen Ausgang digitalisierte Signale anstehen, die dem Logarithmus des Eingangssignals und damit dem Logarithmus der Intensität des auf die Fotodioden einfallenden Lichtes proportional sind. Die Ausgangssignale des A/D-Wandlers 105 sind schließlich über einen Eingabeport 106 einem Microprozessorsystem 107 zur weiteren Verarbeitung und Auswertung zugeführt. Periphere Teile des Microprozessorsystems sind eine Eingabevorrichtung 108 zur Eingabe von Daten und Instruktionen, sowie eine Anzeigeeinheit 109. Der Ausgang des Microprozessorsystems ist über eine Schnittstelle 110 mit einer Motor-Treiberstufe 111 zur Steuerung der Farbfilter der Filteranordnung 14 gemäss einem vorbestimmten Arbeitsablauf verbunden.

Mit der beschriebenen Anordnung ist die Dichte einer Bildkopie aus dem Verhältnis zwischen der Intensität des von der Bildkopie reflektierten, von der Fotodiode 100 erfaßten Lichtes und der Intensität des auf die Bildkopie gerichteten und von der Fotodiode 101 im Innern des Lichtmischschachtes erfaßten Lichtes ermittelbar. Dabei ist die Dichte D durch folgende Beziehung ausdrückbar:

$$D = k \left( \log \frac{Uo}{Ue1} - \log \frac{Uo}{Ue2} \right) = Z_1 - Z_2 \qquad (1)$$

mit

$$Z_1 = k \log \frac{Uo}{Ue1} \quad \text{und} \quad Z_2 = k \log \frac{Uo}{Ue2}$$

wobei Ue1 und Ue2 die von den beiden Fotodioden für die Intensität des Reflexions- bzw. Einfallslichtes gegebenen Meßwerte und k und Uo Konstanten sind.

In der praktischen Anwendung wird beim Eintesten des Vergrößerungsgerätes von einer festgestellten Dichtedifferenz zwischen einer Testkopie und der Referenzkopie ausgegangen und in Abhängigkeit davon eine Korrektur der Belichtungsbedingungen vorgenommen.

Mit Bezug auf die Referenzkopie wird der Ausdruck (1) zu:

$$D_R = Z_{R1} - Z_{R2} \qquad (2)$$

und gleicherweise mit Bezug auf die Testkopie:

$$D_T = Z_{T1} - Z_{T2} \qquad (3)$$

woraus sich durch Bildung der Differenz aus (2) und (3) die Dichteabweichung $\triangle D$ wie folgt ergibt:

$$\triangle D = D_T - D_R + (Z_{T1} - Z_{T2}) - (Z_{R1} - Z_{R2}) \qquad (4)$$

Die Glieder $Z_{T2}$ und $Z_{R2}$ in (4) heben sich dann auf, wenn das auf die Meßfläche fallende Licht für beide Messungen konstant bleibt.

In der Praxis werden die Dichten selektiv in jeder der Grundfarben Rot, Grün und Blau gemessen, und die Farbdichteabweichungen $\triangle D_R$, $\triangle D_G$, $\triangle D_B$ bezüglich einer jeden Farbe ermittelt. Aus der Dreiergruppe der Werte $\triangle D_R$, $\triangle D_G$, $\triangle D_B$ sind nach einem an sich bekannten Berechnungsverfahren die Korrekturen bestimmbar, die an den Belichtungsbedingungen, insbesondere an den Belichtungszeiten mit denen die Testkopie belichtet wurde, vorzunehmen sind, derart, daß eine unter den neuen Belichtungsbedingungen belichtete Kopie die Dichtewerte der Referenzkopie aufweist. Die erforderliche Korrektur C ergibt sich beispielsweise aus folgender Formel in Matrix-Schreibweise

$$(C) = (a)^{-1} \cdot (\triangle D) \qquad (5)$$

wobei $\underline{a}$ eine $3 \times 3$-Matrix ist, mit der die Steilheit der Schwärzungskurve des verwendeten Kopiermaterials berücksichtigt wird.

Als Hilfsmittel werden eine Referenzvorlage mit einem Graufeld definierter mittlerer Dichte und eine Referenz- oder Zielkopie, welche eine befriedigende Reproduktion des Graufeldes der Eichvorlage darstellt, verwendet. Die Referenzkopie ist vorzugsweise an der Deckplatte 22 im Bereich der Meßfläche fest angeordnet.

In einem beispielsweise durch Eingabe eines Startbefehles in die Eingabevorrichtung 108 ausgelösten, selbsttätig ablaufenden Meßzyklus wird zunächst die Lichtquelle des Vergrößerungsgerätes aktiviert und werden die Farbfilter 11, 12 und 13 der Filteranordnung 14 in einer solchen Reihenfolge und Kombination miteinander in den Strahlengang geführt, daß nacheinander rotes, grünes und blaues Meßlicht entsteht. Nachdem der Anschlagblock 33 in die Leerstellung und die Filter anfänglich alle in die Stellung außerhalb des Strahlenganges gebracht worden sind, werden für eine erste Meßphase beispielsweise das Gelb- und Magentafilter, für eine zweite Meßphase das Gelb- und Cyanfilter und für eine dritte und letzte Meßphase das Cyan- und Magentafilter in den Strahlengang gebracht, so daß jeweils Licht einer einzigen Grundfarbe die Filteranordnung verläßt. Die für jede Grundfarbe ermittelten Lichtmeßwerte bezüglich des von der Referenzkopie reflektierten und des auf die Referenzkopie gerichteten Lichtes werden im Microprozessorsystem gemäß dem weiter oben angegebenen Verrechnungsmodus verrechnet und die Ergebniswerte werden gespeichert. Der gleiche Meßzyklus wird dann in bezug auf eine Testkopie wiederholt, die mit dem Vergrößerungsgerät unter probeweise eingestellten Belichtungsbedingungen von der Eichvorlage belichtet wurde. Hierzu wird anstelle der Referenzkopie die Testkopie in die Meßstellung gebracht, indem sie unter die Deckplatte 22 gelegt wird. Eine eventuelle Dichtedifferenz zwischen der Referenzkopie und der versuchsweise erstellten Testkopie in wenigstens einer Farbkomponente ergibt eine Abweichung der neuen Meßwerte von den vorhin gespeicherten und aus dieser Abweichung wird im Microprozessorsystem die erforderliche Korrektur der Belichtungswerte ermittelt. Mit den neuen Belichtungswerten wird eine weitere Testkopie erstellt und der Vorgang so lange wiederholt, bis im wesentlichen Übereinstimmung der Dichtewerte einer Testkopie und der Referenzkopie besteht und der Eintestvorgang damit abgeschlossen ist.

In einem anfänglichen Meßzyklus gespeicherte Meßwerte bezüglich einer Referenzkopie bleiben für eine Reihe zu messender Testkopien als Bezugswerte erhalten, ohne daß die Messung der Referenzkopie wiederholt zu werden braucht. Die Referenz- oder Zielkopie ist vorzugsweise auswechselbar an der Deckplatte 22 befestigt, damit durch geeignete Auswahl eine Anpassung hinsichtlich einer bevorzugten Bildqualität vorgenommen werden kann.

Die Meßebene befindet sich vorzugsweise an einer Seitenwand des Farbkopfgehäuses an leicht zugänglicher Stelle zum bequemen Plazieren der zu messenden Testkopien in der Meßstellung. Der Lichtleiter 15, beispielsweise ein Plexiglasteil, weist eine der gegenseitigen Lage von Meßstelle und Lichtaufnahme im Lichtmischschacht des Farbkopfes angepaßte Form auf.

Der fotoelektrische Meßaufnehmer 26 im Lichtmischschacht des Farbkopfes übernimmt vorteilhafterweise auch Meßfunktionen im Rahmen der Belichtungssteuerung. Vorzugsweise setzt sich der Meßaufnehmer dann aus mehreren Einzelelementen zusammen, von denen jedes in einer der Grundfarben Rot, Grün und Blau sensibilisiert ist.

**Patentansprüche**

1. Fotografisches Farbvergrößerungs- und Kopiergerät mit einer Meßvorrichtung zum Bestimmen der Dichte in den Farben Rot, Grün und Blau einer Testkopie, die von einer ausgewählten Referenzvorlage erstellt wird, einer Einrichtung zum Speichern der Meßergebnisse in bezug auf eine Zielkopie der Referenzvorlage, wobei Testkopie und Zielkopie in einer Meßfläche angeordnet werden und Mitteln zum selbsttätigen Modifizieren der Belichtungsbedingungen im Vergrößerunggerät in Abhängigkeit einer vorhandenen Differenz der Meßergebnisse zwischen Test- und Zielkopie, dadurch gekennzeichnet, daß die Meßvorrichtung Lichtleitmittel (15) zum Beleuchten einer außerhalb des Kopierstrahlenganges angeordneten Meßfläche mit Licht von der Kopierlichtquelle des Vergrößerungsgerätes aufweist und fotoelektrische Meßaufnehmer (25) auf die Meßfläche ausgerichtet sind, so daß sie von der Meßfläche reflektiertes Meßlicht empfangen und daß die Lichtmeßwerte des reflektierten Lichtes mit Meßwerten der Intensität des Lichtes der Kopierlichtquelle ins Verhältnis gesetzt werden.

2. Fotografisches Farbvergrößerungsgerät nach Anspruch 1, dadurch gekennzeichnet, daß die Meßfläche in der Ebene einer Außenwand (18) des Farbkopfgehäuses (19) des Vergrößerungsgerätes liegt.

3. Fotografisches Farbvergrößerungsgerät nach Anspruch 2, dadurch gekennzeichnet, daß die die Meßebene bildende Außenwand (18) eine Öffnung (20) aufweist, durch welche Meßlicht auf eine zu messende Testkopie gelangt, die von außen an die Öffnung (20) gelegt wird und daß von der Testkopie reflektiertes Licht auf einen fotografischen Meßaufnehmer (25) im Innern des Farbkopfgehäuses (19) fällt.

4. Fotografisches Farbvergrößerungsgerät nach Anspruch 3, dadurch gekennzeichnet, daß an die die Meßebene bildende Außenwand (18) auf der Außenseite eine Deckplatte (22) federnd anliegt, an deren der Öffnung (20) zugewandten Seite eine Referenz- oder Zielkopie (24) befestigt ist.

5. Fotografisches Farbvergrößerungsgerät nach Anspruch 1, dadurch gekennzeichnet, daß die Lichtleitmittel (15) einen oder mehrere Plexiglasteile umfassen.

6. Fotografisches Farbvergrößerungsgerät nach Anspruch 1, dadurch gekennzeichnet, daß die Meßvorrichtung eine Filteranordnung (10) zur Gewinnung von rotem, grünem und blauem Meßlicht aus dem im wesentlichen weißen Licht der Kopierlichtquelle in farbselektiven Meßphasen aufweist.

7. Fotografisches Farbvergrößerungsgerät nach Anspruch 6, dadurch gekennzeichnet, daß zur Gewinnung des farbigen Meßlichtes die Farbfilter der Belichtungseinrichtung des Vergrößerungsgerätes eingesetzt werden.

8. Fotografisches Farbvergrößerungsgerät nach Anspruch 7, dadurch gekennzeichnet, daß die Filteranordnung einen Anschlagblock (33) mit einstellbaren Anschlagbolzen (38) aufweist und der Anschlagblock (33) von einer Wirkstellung, in der die Anschlagbolzen einen Endanschlag für die Filterbewegung bilden, in eine Leerstellung bewegbar ist, in der die Anschlagbolzen außerhalb der Bewegungsbahn der Filter liegen.

## Claims

1. Photographic colour enlarging or copying apparatus having a measuring device for determining the density in the colours red, green and blue of a test copy which is made from a selected reference original, a device for storing the measurement results with respect to a target copy of the reference original, wherein the test copy and the target copy are arranged in a measuring area, and means for the automatic modification of the exposure conditions in the enlarging apparatus in dependence on a difference that is present in the measurement results between the test and the target copy, characterized in that the measuring device has light-guiding means (15) for illuminating a measuring area arranged outside the path of the copying rays with light from the copying light source of the enlarging apparatus and photoelectric measuring sensors (25) are aligned with the measuring area so that they receive measuring light reflected by the measuring area and the light measurement values of the reflected light are related to measured values of the intensity of the light of the copying light source.

2. Photographic colour enlarging apparatus according to claim 1, characterized in that the measuring area lies in the plane of an outer wall (18) of the colour head housing (19) of the enlarging apparatus.

3. Photographic colour enlarging apparatus according to claim 2, characterized in that the outer wall (18) forming the measuring plane has an opening (20) through which measuring light reaches a test copy to be measured, the test copy being placed against the opening (20) from the outside, and light reflected by the test copy falls onto a photoelectric sensor (25) inside the colour head housing (19).

4. Photographic colour enlarging apparatus according to claim 3, characterized in that a cover plate (22) rests resiliently against the outer wall (18) forming the measuring plane, on the outside thereof, on the side of which cover plate facing the opening (20) there is secured a reference or target copy (24).

5. Photographic colour enlarging apparatus according to claim 1, characterized in that the light-guiding means (15) comprise one or more plexiglas parts.

6. Photographic colour enlarging apparatus according to claim 1, characterized in that the measuring device has a filter arrangement (10) for obtaining red, green and blue measuring light from the essentially white light of the copying light source in colour-selective measuring phases.

7. Photographic colour enlarging apparatus according to claim 6, characterized in that, to obtain the coulored measuring light, the colour filters of the exposure device of the enlarging apparatus are used.

8. Photographic colour enlarging apparatus according to claim 7, characterized in that the filter arrangement has a stop block (33) with adjustable stop bolts (38) and the stop block (33) is movable from an operative position, in which the stop bolts form an end stop for the filter movement, into an idle position, in which the stop bolts lie outside the path of movement of the filters.

## Revendications

1. Agrandisseur photographique couleur ou tireuse photographique, comprenant un dispositif de mesure destiné à déterminer la densité, dans les couleurs rouge, vert et bleu, d'un tirage test qui a été produit à partir d'un original de référence choisi, un dispositif destiné à mémoriser les résultats de mesure relatifs à un tirage cible de l'original de référence, le tirage test et le tirage cible étant disposés dans une surface de mesure, et des moyens destinés à modifier automatiquement les conditions d'exposition dans l'agrandisseur en fonction d'une différence des résultats de mesure entre le tirage test et le tirage cible, caractérisé en ce que le dispositif de mesure comprend des moyens conducteurs de lumière (5) destinés à illuminer une surface de mesure disposée en dehors du trajet des rayons de la lumière de tirage, avec une lumière provenant de la source de lumière de tirage de l'agrandisseur, et des capteurs de mesure photoélectriques (25) sont pointés sur la surface de mesure de sorte qu'ils reçoivent la lumière de mesure réfléchie par la surface de mesure et que les valeurs de mesure de la lumière réfléchie sont comparées à des valeurs de mesure de l'intensité de la lumière de la source de lumière de tirage.

2. Agrandisseur photographique couleur selon la revendication 1, caractérisé en ce que la surface de mesure se trouve dans le plan d'une paroi extérieure (18) du carter (19) de la tête couleur de l'argrandisseur.

3. Agrandisseur photographique couleur selon la revendication 2, caractérisé en ce que la paroi extérieure (18) formant le plan de mesure présente une ouverture (20) à travers laquelle la lumière de mesure tombe sur un tirage test à mesurer qui est appliqué de l'extérieur contre l'ouverture (20) et en ce que la lumière réfléchie par le tirage test tombe sur un capteur de mesure photoélectrique (25) placé dans la cavité intérieure du carter (19) de la tête couleur.

4. Agrandisseur photographique couleur selon la revendication 3, caractérisé en ce que, contre la paroi extérieure (18) formant le plan de mesure, est appuyée élastiquement, sur la surface externe, une plaque de fermeture (22), un tirage de référence ou tirage cible (24) état fixé à la face de cette plaque qui est dirigée vers l'ouverture (20).

5. Agrandisseur photographique couleur selon la revendication 1, caractérisé en ce que les moyens conducteurs de lumière (15) comprennent un ou plusieurs élément(s) en Plexiglas.

6. Agrandisseur photographique couleur selon la revendication 1, caractérisé en ce que le dispositif de mesure présente un mécanisme de filtres (10) permettant d'obtenir une lumière de mesure rouge, verte ou bleue, à partir de la lumière essentiellement blanche de la source de lumière de tirage, dans des phases de mesure exécutées sélectivement dans les différentes couleurs.

7. Agrandisseur photographique couleur selon la revendication 6, caractérisé en ce que, pour obtenir la lumière de mesure colorée, on intercale les filtres couleurs du dispositif d'exposition de l'agrandisseur.

8. Agrandisseur photographique couleur selon la revendication 7, caractérisé en ce que le mécanisme de filtres comprend un bloc de butées (33) muni de tiges de butées réglables (38) et le bloc de butées (33) peut être amené d'une position active, dans laquelle les tiges de butées forment une butée de fin de course pour le mouvement des filtres, à une position inactive dans laquelle les tiges de butées se trouvent en dehors de la trajectoire des filtres.

Fig. 1

Fig. 3

Fig. 2a

Fig. 2b